Europäisches Patentamt

European Patent Office

Office européen des brevets

(11) Veröffentlichungsnummer: **0 304 498 B1**

(12) **EUROPÄISCHE PATENTSCHRIFT**

(45) Veröffentlichungstag der Patentschrift: **02.06.93**

(51) Int. Cl.⁵: **E04B 1/61**, E04C 3/30, B23Q 3/00

(21) Anmeldenummer: **87111299.1**

(22) Anmeldetag: **05.08.87**

(54) **Fügeflächenstruktur zur Führung und/oder Positionierung von Bauelementen.**

(43) Veröffentlichungstag der Anmeldung:
**01.03.89 Patentblatt 89/09**

(45) Bekanntmachung des Hinweises auf die
Patenterteilung:
**02.06.93 Patentblatt 93/22**

(84) Benannte Vertragsstaaten:
**AT BE CH DE ES FR GB GR IT LI LU NL SE**

(56) Entgegenhaltungen:
EP-A- 0 180 866       EP-A- 0 203 888
DE-A- 2 225 302       DE-C- 2 537 146
FR-A- 1 007 772       FR-A- 1 400 719

(73) Patentinhaber: **Militzer, Otto Michael, Dr.-Ing.**
**Wäldershausen 3**
**W-6313 Homberg/Ohm(DE)**

Patentinhaber: **Treugut, Andreas**
**Falterstrasse 4**
**W-8566 Leinburg(DE)**

(72) Erfinder: **Militzer, Otto Michael, Dr.-Ing.**
**Wäldershausen 3**
**W-6313 Homberg/Ohm(DE)**
Erfinder: **Treugut, Andreas**
**Falterstrasse 4**
**W-8566 Leinburg(DE)**

## Beschreibung

Die Erfindung betrifft eine Fügeflächenstruktur, die mit entsprechend komplementär gestalteten Gegenflächen gefügt wird, zur Führung und/oder Positionierung von Bauelementen.

Als Fügeflächen seien dabei die aneinander gefügten Flächen zweier Körper und als Struktur die Gestaltung dieser Flächen bezeichnet.

Den speziellen Eigenschaften der erfindungsgemäßen Fügeflächenstruktur entsprechend, wird sie zur Lösung vielfältiger Aufgabenstellungen in die Oberfläche entsprechender technischer Körper -hier Bauelemente genannteingebracht, oder stellt weitestgehend deren Oberfläche dar.

Vorteilhafte Anwendungen ergeben sich insbesondere bei Spann-, Positionier- und Kupplungsaufgaben, sowohl in statischem Einsatz, als auch bei Bewegungsübertragung, in der Vorrichtungs-, Maschinen- und Anlagentechnik, sowie in der Bautechnik.

Bekannt sind Fügeflächenstrukturen in vielfältigen Ausführungen und Anwendungen. Sie haben im allgemeinen die Aufgabe, einen Körper an einem anderen auf definierter Bahn zu führen oder in einer definierten Position zu fixieren, d.h. zu positionieren. Zur Übertragung von Kräften werden dabei häufig zusätzliche kraft- oder formschlußbewirkende Elemente, wie beispielsweise Schrauben, eingesetzt.

Die einfachsten bekannten Strukturen stellen glatte Flächen dar. Formschlüssige Führung oder Positionierung werden hier durch zusätzliche Elemente, wie beispielsweise Stifte, Achsen und Anschläge, erreicht. Für den Übergang der Funktion 'Führen' zur Funktion 'Positionieren' und umgekehrt müssen dabei meist zusätzliche Elemente entfernt oder hinzugefügt oder zusätzliche fremde Positionierfunktionen eingebracht oder gelöst werden. Meist wird jedoch nur eine der beiden Funktionen überwiegend oder ausschließlich genutzt und bestimmt damit die Gestaltung der Fügeflächen.

Bei einer allgemeinen Aufgabenstellung 'Führen' sind formschlüssige Rastpositionen meist störend und deshalb dann nicht vorgesehen.

Bei komplizierten Fügeflächenstrukturen für die Aufgabenstellung 'Positionieren' beschränkt sich die Führungsfunktion meist auf das Einführen der Gegenfläche in eine Rastposition mit Hilfe von Abschrägungen und ähnlichem. In zwei bekannten Einrichtungen zum Positionieren von Bauteilen (DE-PS 25 37 146 und EP-A-0 180 886) werden zwischen zwei Fügeflächen, die mit Positonierbohrungen bzw. Positioniernuten versehen sind, mit einer etwas aufwendigen Handhabung zusätzliche kugelige oder zylindrische Elemente eingefügt, über die ein gegenseitiges Positionieren der beiden Flächen erzielt wird. Auch hierbei ist die Führungsfunktion der schrägen Bohrungs- oder Nutwandungen beschränkt und dient vorrangig dem gegenseitigen exakten Zentrieren beider Fügeflächen.

Ähnliche Beschränkungen der Führungs- und auch der variablen Positionierfunktion weisen bekannte Fügeflächen auf, die an den einander zugewandten Anlageflächen zueinander komplementäre, flankentragende Profile aufweisen, die sich ausschließlich an diesen Flanken gegenseitig positionierend abstützen (DE-PS 34 35 119, EP-A-0 203 888, DE-OS-23 45 436).

Bei gleichrangiger Aufgabenstellung 'Führen' entlang von Führungsachsen und 'Positionieren' in Rastpositionen, beispielsweise in bekannten, mit Nockenscheiben versehene Überlastkupplungen, beschränkt sich die Führungsaufgabe entsprechender Flächen oder Kanten darauf, im Überlastungsfall exaktes Springen von Rast- zu Rastposition zu ermöglichen. Entlang der Führungsachsen weitere Positionen mit Stützfunktion zu erreichen, sind hierbei nicht möglich. Entsprechendes gilt für bekannte, selbstzentrierende Teil- und Positionierringe mit konischer Außenverzahnung (Hirthverzahnung).

Da häufig, wie bei den beiden zuvor genannten Beispielen, die Rastposition durch Fügen eines (positiven) Flächenvorsprungs in eine entsprechende (negative) Flächenvertiefung der Gegenfügefläche erreicht wird, kann hier ein wesentlicher Nachteil dieser Fügemethoden gezeigt werden: Das Verlassen einer Rastposition erfordert quer zur Richtung der gewünschten Weiterbewegung ein erhebliches Auseinanderbewegen beider Fügeflächen, um mit der Flächenerhöhung der einen Seite aus der Vertiefung der anderen Seite heraus- und über die nachfolgende Erhöhung der anderen Seite hinwegzukommen.

Ein weiterer Nachteil für bestimmte Aufgabenstellungen ergibt sich bei vielen Fügeflächenstrukturen daraus, daß exaktes oder auch exakt wiederholbares Positionieren zweier Fügeflächen zueinander oft gar nicht oder nur unter erschwerten Bedingungen möglich ist. Dies gilt insbesondere bei bekannten Fügeflächen, die keine definierten Raststellen, sondern nur Führungsflächen oder Nuten aufweisen und in denen nur Stützpositionen eingestellt werden können, wie beispielsweise an Maschinentischen mit T-Nuten. In anderen Ausführungen, beispielsweise an Maschinentischen mit Bohrungsrastern, bedarf exaktes Positionieren einer hohen und teuren Genauigkeit der Rastermaße, der Paßbohrungen und der Paßschrauben.

Ein weiteres nachteiliges Problem vieler Fügeflächenstrukturen besteht darin, daß über die Gesamtfläche verteilt, große Stütz-, Führungs oder Rastflächenanteile beider Fügeflächen gegenseitig zur Anlage kommen und deshalb entweder eine sehr genaue Flächenbearbeitung erforderlich ist oder durch großflächige Überbestimmung eine undefinierbare Flächenanlage und Kraftübertragung entsteht, wie z.B. bei Zahnwellen-Verbindungen. Bei einer zusätzlichen Verbindung der beiden Fügeflächen durch ein haftendes, sich verfestigendes Zwischenmedium können exakte Abstände zwischen großflächig aneinanderliegenden Flächen nur schwierig oder gar nicht eingehalten werden.

Der Erfindung liegt daher die Aufgabe zugrunde, eine Fügeflächenstruktur, die mit entsprechend komplementär gestalteten Gegenflächen gefügt wird, zur Führung und/oder Positionierung von Bauelementen zu schaffen, die die vorgenannten Nachteile weitestgehend vermeidet, für eine große Vielfalt von Aufgabenstellungen einsetzbar ist und der jeweils erforderlichen Exaktheit der Führungs- oder Positionierbedingungen entsprechend preiswert zu fertigen ist.
Diese Aufgabenstellung wird erfindungsgemäß mit einer Fügeflächenstruktur nach Anspruch 1 gelöst. Vorteilhafte Ausgestaltungen sind in den Unteransprüchen genannt.

Die Erfindung geht dabei von der Erkenntnis aus, daß eine der Aufgabenstellung entsprechende Fügeflächenstruktur derart gestaltet sein muß, daß sie sowohl eindeutige Führungsfunktionen entlang von Führungsachsen und zum 'Einfädeln' in Rastpositionen, als auch eindeutige Positionierfunktionen in Raststellen aufweist, wobei für den Übergang von der einen zur anderen Funktion nur geringe Zusatzbewegungen erforderlich sein dürfen. Zusätzlich müssen frei wählbare Stützpositionen zwischen den Raststellen einstellbar sein.
Außerdem liegt die Erkenntnis zugrunde, daß nur relativ kleine Flächenanteile der Gesamtfügefläche sich an einer entsprechenden Gegenfläche abstützen dürfen, um aus einer Summe mehrerer sich elastisch anpassender Überbestimmungen exakt definierbare und exakt wiederholbare Positionierungen und gleichmäßig verteilte Kraftübertragungen zu ermöglichen. Dazu muß die Fügeflächenstruktur Winkel- und Maßsymmetrien aufweisen. Sie muß, von einer einzelnen Basisstruktureinheit ausgehend, durch direktes Aneinanderreihen gleichartiger Einheiten oder durch deren Zuordnung in definierten Abständen beliebig erweiterbar sein. Darüber hinaus soll sie integrierte und unabhängige Bezugsflächen oder -kanten aufweisen und je nach Aufgabenstellung den einfachen Einbau von Einrichtungen, beispiels weise für zusätzlichen Kraftschluß in Rast- und Stützpositionen oder auch für das Herausheben aus Rastpositionen und das Sperren gegen erneutes Einrasten ermöglichen. Sie muß weiterhin sowohl integrierter Bestandteil von Bauelementen sein können, als auch auf einfache Weise in einen Zwischenträger eingebracht und mit den entsprechenden Elementen verbunden werden können. Als weitestgehende Konsequenz soll sie insgesamt die einheitliche Außenstruktur eines einzelnen Bauelementes darstellen.

Diese erfindungsgemäßen Bedingungen werden dadurch erfüllt, daß die Fügeflächenstruktur aus einer Kombination von Stützflächen, Führungsflächen, Führungsachsen und einer oder mehreren Rastpositionen besteht, indem an dach- oder bodenbildende Flächenanteile Profilflanken anschließen, die winkelsymmetrisch aneinanderstoßen und die mit ihren Längsachsen einander kreuzende Führungsachsen bilden, entlang derer eine jeweilige Gegenfügefläche geführt wird, wobei sie sich quer dazu an den Profilflanken abstützt und daß zusätzlich die, durch die sich treffenden Profilflanken hervorgerufenen Kanten ganz oder teilweise abgeflacht sind, und somit an der Kreuzung der Führungsachsen eine Raststelle bilden, indem einige oder alle Flankenkanten eine jeweilige Gegenfügefläche über die Abflachungen positionierend abstützen und daß beim Übergang vom positionierenden Abstützen zum Führen der Gegenfügefläche ein Ausheben aus der Rastposition mit einem Hub $h_2$ erforderlich ist, der erheblich kleiner als die Strukturhöhe $h$ zwischen den dach- und bodenbildenden Flächenanteilen (3,4), von der Breite $b$ der Abflachung der Flankenkanten und vom Kantenwinkel $\beta$ abhängt.

Diese neuartige Kombination und Zuordnung von Achsen, Flächen und Zentren zum Führen, Stützen und Positionieren hat die Vorteile einer einfachen geometrischen Formgebung.
Verschiedensten Aufgabenstellungen kann diese Fügeflächenstruktur unkompliziert angepaßt werden, sowohl in den Maßverhältnissen, der Erweiterungsfähigkeit, der Formgebung, der Werkstoffauswahl, der Gestaltung des die Struktur tragenden Körpers, der Einbringung zusätzlicher Einrichtungen, als auch in den Fertigungsmethoden.

Das erfindungsgemäß neuartige Prinzip der positionierenden Abstützung einer Gegenfügefläche über die relativ schmalen Abflachungen der Kanten der sich treffenden Profilflanken in den Raststellen ermöglicht ein ein exaktes, reproduzierbares und selbstzentrierendes Positionieren. Für das stabile Zentrieren und gegenseitige Abstützen, selbst sehr schmaler Abflachungen aufeinander, genügt schon die Nutzung zweier Raststellen und deren räumliche Ausrichtung zueinander. Entsprechend werden große Kräfte über eine Vielzahl gleicher Raststellen übertragen. Unvermeidbare Fertigungstoleranzen in den Raststellen gleichen sich unter Druck der Gegenfügefläche durch werkstoffabhängige Verformungen der abgeflachten Flankenkanten aus. Falls erforderlich, werden diese Verformungen durch die Fügeflächengestaltung selbst innerhalb zulässiger Bereiche begrenzt, sowie elastische und plastische Verformungsanteile durch die Wahl der Abmessungen gezielt vorgegeben. Aufgrund der stetigen Querschnittserweiterung unter den Abflachungen der Flankenkanten ist bei elastischen Werkstoffen eine progressive Kennlinie der elastischen Verformung gegeben, die auch die Nutzung von Eigendämpfungseigenschaften des Werkstoffes ermöglicht.

Sollen die erfindungsgemäßen Fügeflächenstrukturen in den Rastpositionen gefügt und durch Kleber oder Zemente miteinander verbunden werden, dann kann dies ohne zusätzliche Bauhöhe durch eine Zwischenschicht erfolgen. Die sich verfestigenden Haftmedien werden dazu in die Freiräume, die zwischen den gegenseitigen Fügeflächen entlang der Führungsachsen vorhanden sind, eingebracht. Eventuelle Verschmutzungen der sich gegenseitig abstützenden Abflachungen der Flankenkanten werden durch festes Anpressen beseitigt.

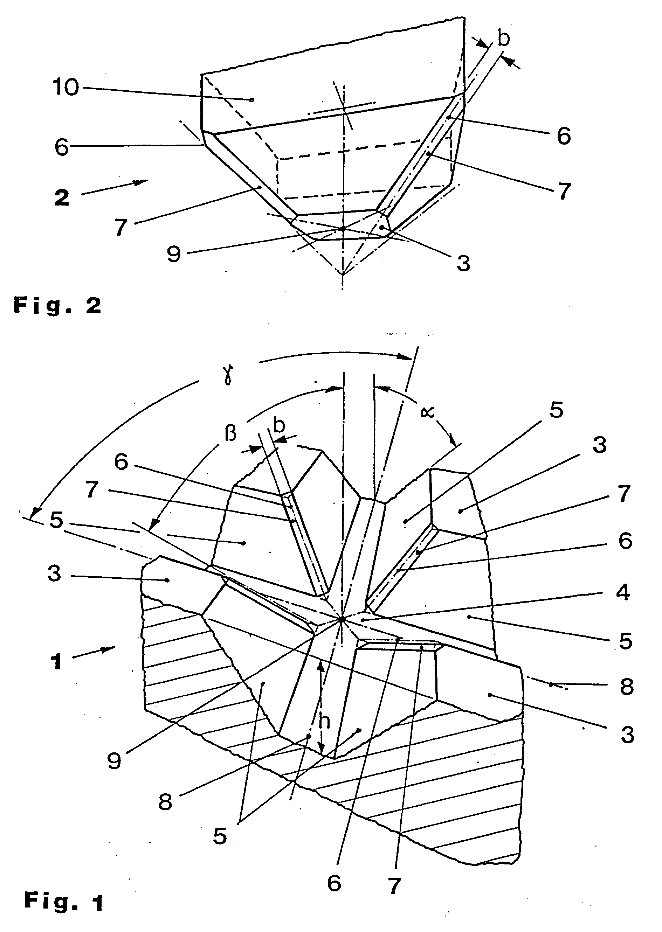

Diese vorteilhaften Eigenschaften sind anhand der Fig. 1 bis 11 beispielhaft dargestellt und nachfolgend beschrieben.

In Fig. 1 ist eine Basiseinheit (1) der Fügeflächenstruktur -aus einer beliebigen Fläche ausgeschnitten- dargestellt. Die Dachflächen (3) bilden den äußersten (positiven) Flächenvorsprung und die Bodenflächen (4) die innerste (negative) Flächenvertiefung. An die Dach- und Bodenflächen schließen sich Profilflanken (5) an, die winkelsymmetrisch aneinanderstoßen und deren Stoßkanten (6) Abflachungen (7) aufweisen. Die Achsen der Flanken sind die Führungsachsen (8), deren Kreuzungen (9) das Zentrum einer Raststelle bilden.

Hier können entsprechende, durchaus verschiedenartige Gegenflächen 'einrasten', indem sie sich über die Abflachungen (7) positionierend abstützen. Ihr äußerster Flächenvorsprung wird dabei jedoch so niedrig gehalten daß er nicht zuvor auf der gegenüberliegenden Bodenfläche (4) aufliegt.

Fig. 2 zeigt eine solche Gegenfügefläche (2), die in sich die gleichen Strukturbedingungen erfüllt, wie die in Fig. 1 dargestellte, jedoch mit dem Unterschied, daß nur eine Dachfläche (3) und keine Bodenfläche vorhanden ist. An die Profilflanken (5) können sich beliebig andere Flächen anschließen, im vorliegenden Fall senkrechte Seitenwände (10).

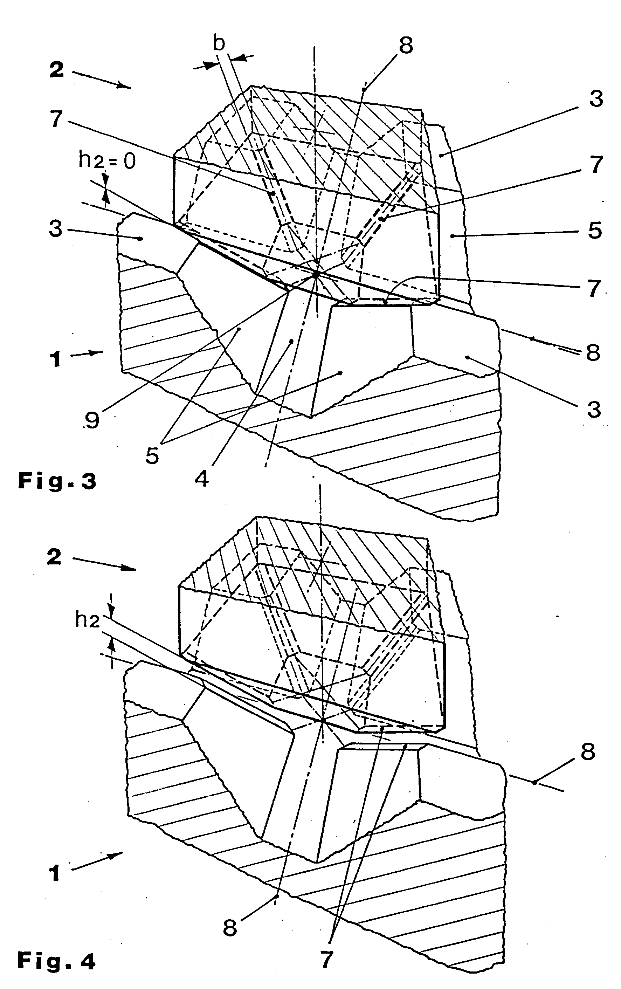

In Fig. 3 sind beide Fügeflächen (1,2) in der Rastposition zusammengefügt. Die gegenseitige Abstützung der Abflachungen (7) der Stoßkanten (6) bewirkt die selbstzentrierende Positionierung in das Zentrum (9) der Raststelle mit den zuvor schon genannten Vorteilen.

Neben dem Gestaltungsprinzip, daß an den Kreuzungsstellen (9) die Flankenkanten (6) mit ihrer Abflachung (7) zueinander zentralsymmetrisch verlaufen, besteht jedoch die Freiheit, die Abflachungen in konstanter oder gleichmäßig veränderter Breite oder auch nur teilweise auszuführen und -im Querschnitt betrachtet- leicht konkav, konvex oder gerade. Abhängig von den Aufgabenstellungen kann die Breite b der Abflachungen sehr unterschiedlicher Werte im Verhältnis zur Strukturhöhe h aufweisen, um unterschiedlichen Werkstoffen oder Kontaktbedingungen zu entsprechen.

In Fig. 4 ist die Aushubhöhe h2 dargestellt, die für die Fügefläche (2) mindestens erforderlich ist, um danach die Rastposition in beliebiger Richtung entlang einer Führungsachse (8) zu verlassen und eine andere definierte Position in einer weiteren Raststelle zu erreichen oder dazwischen eine Stützposition, mit einer Abstützung quer zur Führungsachse einzunehmen.

Diese Hubhöhe ist bei einer Struktur, wie sie die Fügefläche (2) aufweist, nur noch vom Maß der Abflachung der Flankenkanten im angepreßten Zustand und von deren Kantenwinkel $\beta$ abhängig. Nimmt man dabei konstante, ebene Abflachungen (7) mit den Breiten b1 = b2 = b an, dann ergibt sich beispielsweise bei 90° kreuzenden Flankenachsen und $\alpha = 30°$ Flankenwinkel ein Kantenwinkel $\beta = 39{,}2°$ und die sehr kleine Mindestaushubhöhe von h2 = b/tan $\beta$ = 1,23.b .

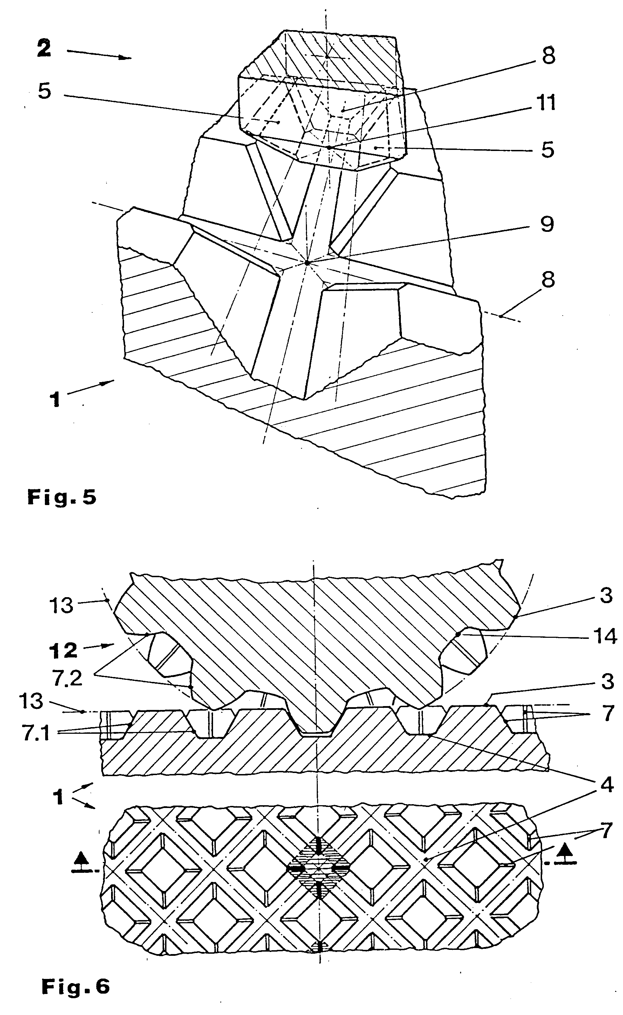

Fig. 5 zeigt zur Verdeutlichung des Vorganges die aus der Rastposition (9) der Struktur (1) herausgehobene und entlang einer Führungsachse (8) in eine Stützposition (11) verschobene Struktur (2). Hier stützt sie sich über die gegenseitigen Profilflanken (5) quer zur Führungsachse ab.

Die Dachflächen (3) der Fügeflächenstruktur (1, 2, 12) können Teile einer integrierten, einheitlich geformten Bezugs- und/oder Stützfläche (13) darstellen, zur Auflage beliebiger Elemente und als Höhenmaß-Basis bei Element- und Fügeflächenkombinationen. Diese einheitlichen Flächen können unterschiedlich geformt sein.

Fig. 6 zeigt im Schnitt durch die Abflachungen (7) der Flankenkanten eine Zylinderflächenstruktur (12), gefügt mit einer ebenflächigen Struktur (1), ohne Änderung der grundlegenden Eigenschaften, jedoch mit wesentlicher Erweiterung der praktischen Anwendungsmöglichkeiten. Hier ist auch beispielhaft dargestellt, die Dach- und Bodenflächen (3, 4, 14) in unterschiedlicher Breite und Krümmung auszuführen. Ebenso kann die Form der Profilflanken (5) bzw. der Abflachungen (7) den Aufgabenstellungen angepaßt und mit unterschiedlichen Winkeln als ebene (7.1) oder gleichförmig, beispielsweise evolventenförmig (7.2) gekrümmte Fläche ausgeführt werden.

Unabhängig von der Form und Krümmung der Dach- und Bodenflächen (3, 4) kann der Höhenstand h zwischen ihnen und die Abflachung (7) der Flankenkanten derart aufeinander abgestimmt sein, daß zu einer zweiten, gleichartig gestalteten und in der Rastposition (9) ohne Anpreßdruck gefügten Gegenfläche ein geringfügiger Abstand h1 zwischen den gegenseitigen Dach- und Bodenflächen besteht.

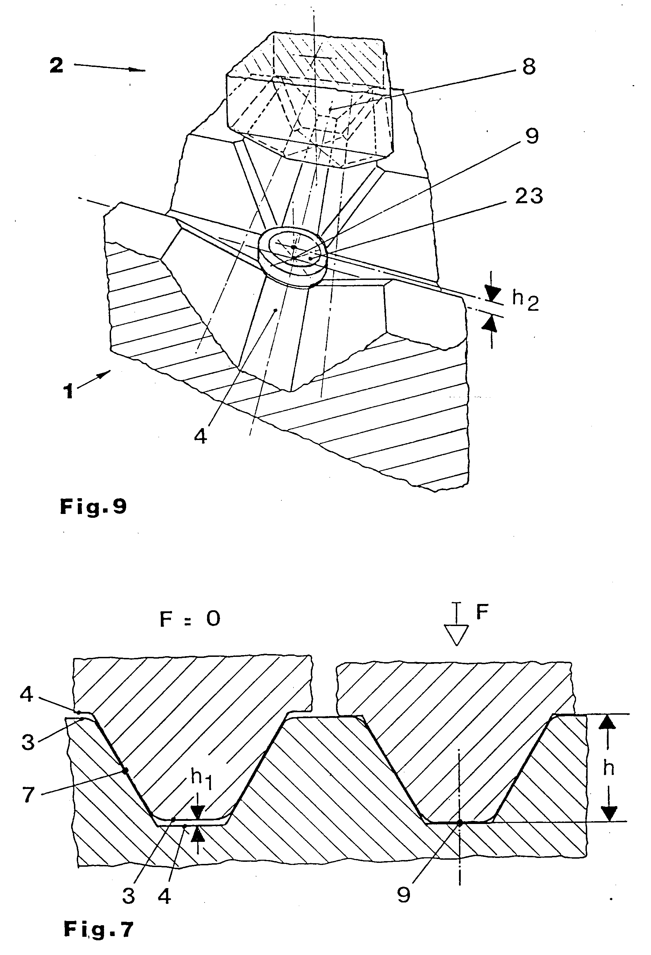

Fig. 7 zeigt dies als Schnitt durch die sich gegenseitig äbstützenden Abflachungen. Unter einem entsprechenden Anpreßdruck verformen sich die abstützenden Abflachungen weiter, bis der Abstand h1 zu Null wird und eine zusätzliche Abstützung über die jeweiligen Dach- und Bodenflächen entsteht. Das hat den Vorteil, daß sich bei weiter erhöhtem Anpreßdruck keine weiteren Verformungen der Abflachungen ergeben. Diese Verformungen können im überwiegend elastischen Bereich gehalten werden, so daß weitestgehend exakt wiederholbare Positionierungen mit unterschiedlichsten Anpreßdrücken möglich sind. Zusätzlich werden bei gegenseitiger Anlage der jeweiligen Dach- und Bodenflächen, unabhängig vom Anpreßdruck, exakt definierbare Höhenmaße erreicht. Trotz der vergrößerten Abstützfläche kommt weiterhin nur ein geringer Teil der Gesamtfläche - ca 20% bis 25% - zur gegenseitigen Anlage.

Die zuvor beschriebene Gestaltungsweise ist zweckmäßig, wenn die Fügeflächenstruktur größere Flächenbereiche überdeckt und eine oder mehrere Gegenflächen darauf positioniert werden sollen, ohne daß sich gegenseitige Maß- und Wiederholunggenauigkeiten verändern.

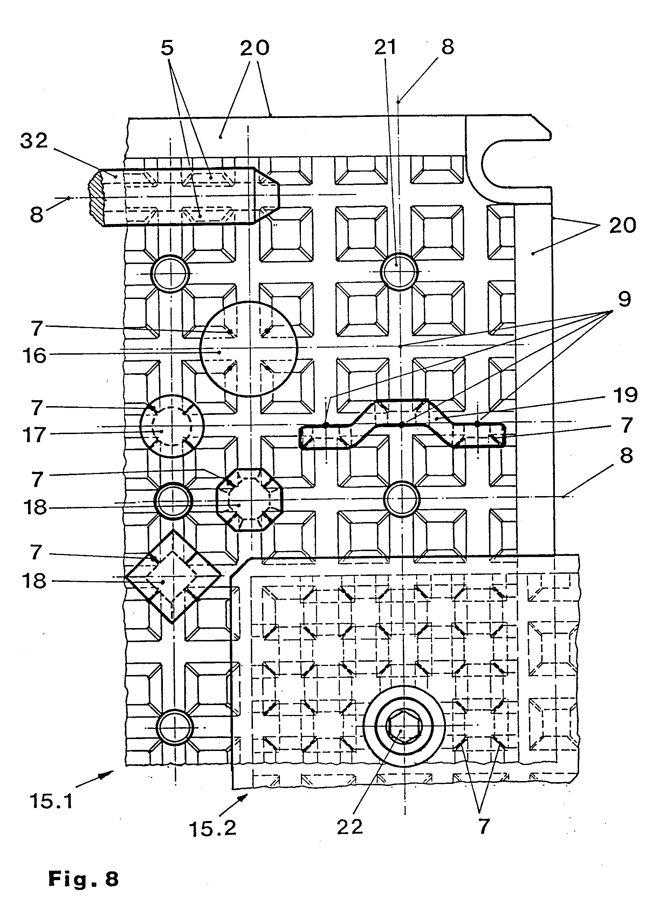

Fig. 8 zeigt ein Beispiel für einen solchen Flächentyp (15.1). Er kann mit einer dazu weitestgehend identischen Gegenfläche (15.2) gefügt werden. Zusätzlich können darin jedoch auch kugelige (16), kegelstumpfförmige (17) oder pyramidenstumpfförmige (18) Flächenstrukturen in der Rastposition an den Abflachungen (7) abgestützt und entlang der Führungsachsen geführt werden. Insbesondere für diese Art von abgestützten Gefenflächen kann vorgesehen sein, daß sie sich die erforderliche Breite der Abflachungen erst unter Anpreßdruck selbst bilden.

Auch eine Gegenfügestruktur (19) ist denkbar, die sich wechselseitig nur an einigen Abflachungen (7) mehrerer Kreuzungsstellen (9) abstützt. Selbstverständlich können entsprechende Profilflächen (32) auch ausschließlich an den Profilflanken (5) geführt und abgestützt werden. Fig. 8 zeigt auch Bezugs-, Führungs- oder Stützflächen (20) mit eindeutiger Zuordnung zu den Kreuzungsstellen (9), jedoch unabhängig von der eigentlichen Fügestruktur. Die Struktur kann auch von Öffnungen oder Bohrungen (21) durchbrochen werden, die einen eindeutigen, jeweils symmetrischen Bezug zu den Kreuzungsstellen aufweisen.

Beispielsweise können durch diese Bohrungen (21) zusätzliche Einrichtungen wie Schrauben (22), bewegliche Stützflächen und ähnliches eingebracht werden, mit deren Hilfe die Fügefläche selbst gehalten oder Gegenfügeflächen kraftschlüssig angepreßt oder aus den Raststellen ausgehoben werden.

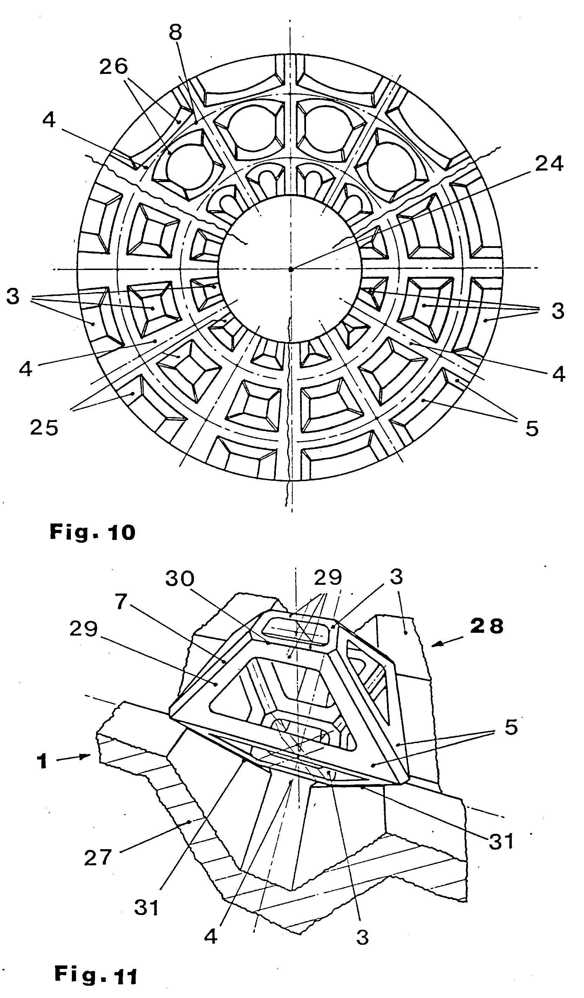

Fig. 9 zeigt eine bewegliche Stützfläche (23), die von unten durch die Bodenfläche (4) im Zentrum (9) der Fügeflächenstrucktur (1) eingebracht ist. Sie dient dazu, eine Gegenfügefläche aus der Rastposition um die zur Weiterbewegung erforderlichen Hubhöhe h2 anzuheben. Bleibt die Stützfläche (23) in dieser angehobenen Position, dann sperrt sie gegen erneutes Einrasten, wenn Gegenfügeflächen (2) wie beispielsweise aus Fig.5 über diese Raststelle hinwegbewegt werden.

Bei den erfindungsgemäßen Fügeflächenstrukturen kreuzen sich in den Raststellen (9) vorzugsweise je zwei Führungsachsen (8) unter einem Winkel von γ = 90°. Es können jedoch auch 3 Führungsachsen gekreuzt und unterschiedliche Kreuzungswinkel gewählt werden.

Die Führungsachsen können gerade oder gekrümmt verlaufen, sodaß bei mehreren Kreuzungsstellen alle entsprechenden Führungsachsen sowohl zueinander parallel (Fig.8) als auch zentralsymmetrisch angeordnet sein können.

Fig. 10 zeigt diese zentralsymmetrische Anordnung in drei Varianten, bei der die Achsen einerseits zu einem Zentrum (24) hin und andererseits konzentrisch um dieses Zentrum herum verlaufen.

In Fig. 10 rechts unten verjüngt sich beispielsweise nur die Dachfläche (3) in Richtung zum Zentrum (24).Die Breite der Bodenflächen (4) und aller Profilflanken (5) und die Strukturhöhe h bleibt konstant. In Fig. 9 links unten verjüngen sich die Dach- und Bodenflächen (3, 4), die Profilflanken (25) und die Strukturhöhe h zum Zentrum hin. Die konzentrischen Profilflanken weisen abhängig von der Entfernung zum Zentrum eine konstante Breite auf.

Fügeflächenstrukturen nach Fig. 10 rechts und links unten können mit gleichartigen Gegenflächen, deren Struktur lediglich im Radius versetzt ist, in Führungsfunktion oder in Rastfunktion gefügt werden.

Fig. 10 oben Mitte zeigt eine ähnliche Struktur wie in Fig. 10 rechts unten, jedoch mit dem Unterschied, daß die Profilflanken (26) entlang der konzentrischen Führungsachsen (8) in sich verändernder Breite verlaufen, wodurch in diesem Bereich auch die Bodenflächen (4) in unterschiedlicher Breite und Höhe verlaufen können. Mit Flankenformen dieser Art wird seitliches Einführen von Gegenfügeflächen in die Rastposition erleichtert.

Beispielsweise für Flächen dieses Typs und bei Aufgabenstellungen mit geführter Bewegung der Flächen gegeneinander, werden vorteilhaft zusätz liche Gleitmedien zwischen die Flächen eingebracht.

Fig. 11 zeigt abschließend beispielhaft zwei weitere Gestaltungsweisen des die Fügeflächenstruktur tragenden Körpers. Die unten abstützende Struktur (1) stellt die Oberfläche einer einfachen, dünnwandigen Flächenstruktur oder eines Hohlkörpers (27) dar, die mit einer gleichartigen dünnwandigen Struktur gefügt werden kann.

Die von oben in die Raststelle eingeführte Gegenstruktur zeigt dagegen die einheitliche Außenstruktur eines einzelnen Hohlkörperelements. Profilflanken (5) und beidseitige Dachflächen (3) können hier durchbrochen sein, sodaß eine Raumstruktur (28) entsteht, dargestellt durch die stabförmigen Flächen (29) entlang der Flächenkanten (30) und der Abflachungen (7) . Die Raumstruktur ist vorteilhaft aus einzelnen Elementen dieser stabförmigem Flächen zusammengesetzt.

Weitere Fügeflächenstrukturen, wie beispielsweise im untenliegenden Hohlkörper (27) können auch zusätzlich von oben angefügt werden, sodaß der einzelne mittlere Körper (28) eine Kopplungsfunktion übernimmt. Zur Befestigung dieser Hohlkörper oder dünnwandigen Strukturen aneinander, können sie über die sich abstützenden Abflachungen (7) der Flankenkanten durch Schrauben, sich verfestigende Haftmedien (31) oder ähnliches gehalten werden.

Wird die Breite der Abflachungen (7) und die Strukturhöhe derart aufeinander abgestimmt, daß sich sowohl die Abflachungen als auch die jeweiligen Dach- und Bodenflächen (3,4) gegeneinander abstützen, dann kann die Befestigung der Hohlkörper auch über diese Flächen erfolgen.

**Patentansprüche**

1.  Fügeflächenstruktur, die mit entsprechend gestalteten Gegenflächen gefügt wird, zum Führen und/oder Positionieren von Bauelementen, **dadurch gekennzeichnet,** daß sie aus einer Kombination von Stützflächen, Führungsflächen, Führungsachsen und einer oder mehreren Rastpositionen besteht (3, 4, 5, 8, 9), indem an dach- oder bodenbildende Flächenanteile (3, 4) Profilflanken (5) anschließen, die winkelsymmetrisch aneinanderstoßen und die mit ihren Längsachsen einander kreuzende Führungsachsen (8) bilden, entlang derer eine jeweilige Gegenfügefläche (2) geführt wird, wobei sie sich quer dazu an den Profilflanken (5) abstützt und daß zusätzlich die, durch die sich treffenden Profilflanken (5) hervorgerufenen Kanten (6) ganz oder teilweise abgeflacht sind und somit an der Kreuzung der Führungsachsen (8) eine Raststelle (9) bilden, indem einige oder alle Flankenkanten (6) eine jeweilige Gegenfügefläche (2) über die Abflachungen (7) positionierend abstützen und daß beim Übergang vom positionierenden Abstützen zum Führen der Gegenfügefläche ein Ausheben aus der Rastposition mit einem Hub h2 erforderlich ist, der, erheblich kleiner als die Strukturhöhe h zwischen den dach- und bodenbildenden Flächenanteilen (3,4), von der Breite b der Abflachung der Flankenkanten und vom Kantenwinkel ß abhängt.

2.  Fügeflächenstruktur nach Anspruch 1 dadurch gekennzeichnet, daß die Abflachung (7) der Flankenkanten (6) in konstanter oder sich gleichmäßig verändernder Breite und, im Querschnitt betrachtet, entweder konkav, konvex oder gerade ausgeführt ist und daß im Verhältnis zur Strukturhöhe h die Breite b der Abflachungen einheitliche Werte zwischen b = ca 0.001*h bis ca 0.5*h aufweist.

3.  Fügeflächenstruktur nach Anspruch 1 und 2 dadurch gekennzeichnet, daß die Dachflächen (3) Teile einer einheitlich geformten Bezugs- und Stützfläche (13) darstellen, vorzugsweise eine Ebene, eine zylinderförmig, kegel- oder kugelförmig gekrümmte Fläche und daß die entsprechende Bezugs- und Stützfläche einer Gegenfügefläche (12) mit gleicher oder unterschiedlicher Form bzw. Krümmung ausgeführt ist, wobei die Bodenflächen (4) eine zu den Dachflächen (3) gleiche oder unterschiedliche Breite oder eine Krümmung (14) aufweisen.

4.  Fügeflächenstruktur nach einem der vorherigen Ansprüche, dadurch gekennzeichnet, daß die Profilflanken (5) ebene Flächen darstellen mit Flankenwinkeln $\alpha$ zwischen ca 15° und ca 75°, oder daß die Profilflanken und mit ihnen die Abflachungen (7) der Flankenkanten gleichförmige, beispielsweise kreis- oder evolventenförmige (7.2) Krümmungen aufweisen und daß die Profilflanken in konstanter (5) oder sich verändernder Breite (25, 26) verlaufen.

5.  Fügeflächenstruktur nach einem der vorherigen Ansprüche, dadurch gekennzeichnet, daß einander entsprechende Führungsachsen (8) mehrerer Raststellen (9) zueinander parallel verlaufen oder zentralsymmetrisch angeordnet sind, beispielsweise einerseits zu einem Zentrum (24) hin und andererseits konzentrisch um dieses Zentrum herum.

6.  Fügeflächenstruktur nach einem der vorherigen Ansprüche, dadurch gekennzeichnet, daß sie eine Gegenfügefläche (15) abstützt, die eine weitestgehend identische Struktur aufweist, oder daß sie eine kegelige, kegelstumpfförmige oder pyramidenstumpfförmige Flächenstruktur (16, 17, 18) abstützt oder eine Gegenfügestruktur (19), die wechselseitig an jeweils nur einigen Flankenkanten (6) mehrerer Raststellen (9) anliegt.

7. Fügeflächenstruktur nach einem der vorherigen Ansprüche,
dadurch gekennzeichnet, daß die Strukturhöhe h und die Breite b der Abflachung (7) derart aufeinander abgestimmt sind, daß zu einer zweiten, gleichartig gestalteten und in der Rastposition (9) ohne Anpreßdruck gefügten Gegenfläche (2), ein geringfügiger Abstand h1 zwischen den gegenseitigen Dach- und Bodenflächen besteht, der nach aufbringen eines vorbestimmten Anpreßdruckes derart zu Null wird, daß die Abflachungen überwiegend elastische Verformungen erfahren.

8. Fügeflächenstruktur nach einem der vorherigen Ansprüche,
dadurch gekennzeichnet, daß sie in die gesamte oder in einen Teil der Oberfläche eines massiven oder hohlen Grundkörpers (1, 27) eingebracht ist und daß dieser Grundkörper aus einem einheitlichen steifen oder elastischen Werkstoff besteht oder aus einer Kombination solcher Werkstoffe.

9. Fügeflächenstruktur nach einem der vorherigen Ansprüche,
dadurch gekennzeichnet, daß die Profilflanken (5) und Dachflächen (3) durchbrochen sind oder nicht aus einer einheitlichen Fläche bestehen, insbesondere, daß sie als Raumstruktur (28) durch Stabflächen (29) entlang der Flankenkanten (6, 30) gebildet wird.

10. Fügeflächenstruktur nach einem der vorherigen Ansprüche,
dadurch gekennzeichnet, daß innerhalb oder außerhalb der Struktur unabhängige Bezugskanten (20, 23) angebracht sind, die eine eindeutige Zuordnung zur Mitte der Raststellen (9) aufweisen und/oder daß sie von Öffnungen (21) durchbrochen wird, die einen eindeutigen, symmetrischen Bezug zu benachbarten Raststellen aufweisen.

11. Fügeflächenstruktur nach einem der vorherigen Ansprüche,
dadurch gekennzeichnet, daß zwischen ihr und einer gefügten Gegenfläche zusätzliche Einrichtungen eingebracht sind, die diese Gegenfläche kraft- oder formschlüssig bewegt (22, 23), sie in Stütz- oder Rastpositionen (9, 11) hält oder aus ihnen löst oder sie dort (31) fest verankert.

## Claims

1. Joint surface structure, joined to adequately shaped countersurfaces for guiding and / or positioning of components, **characterized by** comprising a combination of supporting surfaces, guiding surfaces, guiding axes and one or more locating positions (3, 4, 5, 8, 9), whereby roof or bottom areas of the surface (3, 4) are terminated by profile flanks (5), which abutting each other in angular symmetry, forming intersecting axes of guidance (8) with their longitudinal axes for guiding a respective counter joint surface (2), whereby said surface is transvers supporting at said profile flanks, and comprising edges (6), which are wholly or partially bevelled off, produced by said abutting profile flanks and which therefore define a locating position (9) at the intersection of said axes of guidance, for positioning supporting a said respective counter joint surface by some or all bevelments (7) of said edges, and comprising a lifting height h2, very smaller than the structural height h, to leave the said location position and reach transverse supporting positions at said profile flanks by said counter joint surface, whereby said hight h2 is a function of the width b of said bevelments and the edge angle $\beta$.

2. Joint surface structure according to Claim 1, characterized by the fact, that the bevelments (7) at the edges (6) of the flanks exhibiting either constant or evenly varying widths and being of either concave, convex or straight cross-section, and that the width b of said bevelments, related to the strucutural hight h, assumes uniform values ranging from b = approx. 0.001*h to approx. 0.5*h.

3. Joint surface structure according to Claims 1 an 2,
characterized by the fact, that the roof surfaces (3) form part of a uniformly shaped reference and support surface (13), perferably a plane surface or one exhibiting cylindrical, conical or spherical curvature, and that the corresponding reference and support surface of a counter joint surface (12) exhibits the same or another shape or curvature, whereby said roof surfaces are of the same or another width or curvature (14) as the bottom surfaces (4).

4. Joint surface structure according to any of the preceding claims,
characterized by the fact, that the profile flanks (5) constitute planes with flank angles $\alpha$ between approx. 15 deg. and approx. 75 deg., or that the profile flanks and bevelments (7) exhibit uniform, e.g. spherical or involute-shaped (7.2) curvatures, and that the profile flanks are of constant (5) or varying width (25, 26).

5. Joint surface structure according to any of the preceding claims,
characterized by the fact, that the corresponding guidance axes (8), meeting at given points of intersection (9), will be parallel to each other or arranged centrosymmetrically, e.g. towards a center (24) on one hand and concentrically around said center on the other.

6. Joint surface structure according to any of the preceding claims,
characterized by the fact, that it supports a counter joint surface (15) of largely identical structure or in the form of a sphere, truncated cone or truncated pyramid (16, 17, 18) or a counter joint structure (19) with mutual support being provided by only a few flank edges (6) of several points of intersection (9).

7. Joint surface structure according to any of the preceding claims,
characterized by the fact, that the structural hight h and the width b of the bevelments (7) are matched in such a way as to ensure a smaller distance h1 between the roof and bottom of this surface and a second countersurface (2) of identical design, placed in the locating position (9) without contact pressure, which distance becomes equal to zero following the application of a given contact pressure due to mainly elastic deformation of the supporting said bevelments.

8. Joint surface structure according to any of the preceding claims,
characterized by the fact, that it is fully or partly in the form of a massive or hollow supporting body (1, 27) and that said supporting body is made of a uniform stiff or elastic material or a combination of such materials.

9. Joint surface structure according to any of the preceding claims,
characterized by the fact, that the profile flanks (5) and roof surfaces (3) are of the open-work type or do net consist of a uniform surface, particularly that they are in the form of a three-dimensional structure (28) made up of rodshaped surfaces (29) along the edges (6, 30) of said flanks.

10. Joint surface structure according to any of the preceding claims,

characterized by the fact that within or without the structure, there are mounted independent reference edges (20, 23) which are assigned to the intersecting points (9) by unique defination, and / or that the structure is interrupted by openings (21) which exhibit a uniquely defined, but always symmetrcal relationship with the adjacent points of intersection.

11. Joint surface structure according to any of the preceding claims,
characterized by the fact, that between itself and a second joint surface there are introduced additional devices (22, 23), whereby said joint surfaces are moved by friction or positive interlocking action, or held in or removed there (31) from the supporting or locating positions (11, 9).

## Revendications

1. Structure superficielle de joint, qui est assemblée avec des contre-surfaces formées adéquatement pour le guidage et / ou le positionnement d'éléments de construction et **caractérisée** du fait qu'elle se compose d'une combinaison de surfaces d'appui, surfaces de guidage et une ou plusieurs positions de crantage (3, 4, 5, 8, 9), pendant que des flancs profilés (5) se joignent à des parties de surfaces (3, 4) formant fond qui se contactent symétriquement en angle et qui, par leurs axes longitudinaux, forment des axes de guidage (8) croisant entr'eux, le long desquels une surface de contre-joint (2) est conduite et laquelle s'appuie transversalement contre les flancs profilés et du fait qu'en dehors de cela, les bords (6) causés par les flancs profilés qui se rencontrent sont aplatis en partie tout en formant ainsi une position de crantage (9), pendant que quelques ou tous les bords de flancs (6) soutiennent par positionnement une surface de contre-joint respective, au-dessus des aplatissements (7) et du fait qu'un soulèvement de la position de crantage est nécessaire avec une course h2, lors du passage des appuis de positionnement au guidage de la surface de contre-joint, qui est inférieure à la hauteur de structure h, de la largeur b de l'aplatissement des bords des flancs, qui est dépendante de l'angle des bords $\beta$.

2. Structure superficielle de joint, selon la revendication 1
caractérisée par là, du fait que l'aplatissement (7) des bords des flancs (6) est exécuté en une largeur constante ou se modifiant régulièrement et vue en section, soit concave, convexe ou droite et en rapport avec la hauteur de structure h, présente la largeur b des valeurs unitaires des aplatissements, entre b = environ 0,001*h jusqu'à environ 0,5*h.

3. Structure superficielle de joint, selon la revendications 1 et 2,
caractérisée par là, du fait que les surfaces (3) représentent une surface de référence et d'appui (13), de préférence un plan, une surface courbée de forme sphérique, conique ou cylindrique et de telle sorte que la surface correspondante de référence et d'appui, d'une surface de contre-joint (12) est exécutée avec la même ou différente forme respectivement courbure, à l'occasion de quoi, les surfaces d'encombrement (4) montrent une largeur constante ou différente, ou une courbure (14).

4. Structure superficielle de joint, selon une des revendications précédentes,
caractérisée par là, du fait que les flancs profilés représentent des surfaces planes (5), avec des angles de flancs α entre 15° environ et environ 75°, ou alors que les flancs profilés et avec eux les aplatissements (7) ou des bords de flancs, montrent par example des courbes de forme circulaire ou développante (7.2) et que les flancs profilés se déroulent en une largeur constante (5) ou variable (25, 26).

5. Structure superficielle de joint, selon une des revendications précédentes,
caractérisée par le fait que des axes adéquates de guidage réciproques (8) se déroulent parallèlement à plusieurs positions de crantage (9), par exemple d'un côté vers un centre (24) et d'un autre côté, concentriquement autour de celui-ci.

6. Structure superficielle de joint, selon une des revendications précédentes,
caractérisée du fait qu'elle soutient une surface de contre-joint (15) laquelle montre une importante structure identique uo qu'ellee soutient une structure de surface de forme pyramidale bout à bout ou sphérique ou conique (16, 17, 18) ou une structure de contre-joint (19), qui est adjacente alternativement et respectivement, avec seulement quelques bords de flancs (6) de plusieurs positions de crantage (9).

7. Structure superficielle de joint, selon une des revendications précédentes,
caracterisée du fait que la hauteur structurelle h et la largeur b de l'aplatissement (7) sont accordées l'une contre l'autre, de telle qu'une deuxième contre-surface (2) formée de la même manière et sans pression appliquée dans la position de crantage (9), un écartement réduit h1 a lieu entre les surfaces de fond, lequel devient nul après la présence d'une pression appliquée prédéterminé, du fait qu'en majeure partie, les aplatissements subissent pour la plupart des déformations élastiques.

8. Structure superficielle de joint, selon une des revendications précédentes.
caractérisée du fait que dans l'ensemble ou une partie de la surface, un corps de base massif ou creux (1, 27) a été introduit et du fait que ce dernier se compose d'une matière homogéne rigide ou élastique, ou provenant d'une combinaison de tels matériaux.

9. Structure superficielle de joint, selon une des revendications précédentes,
caractérisée du fait que les flancs profilés (5) et les surface (3) sont découpées ou ne font pas partie d'une surface homogène, en particulier du fait qu'elle sera formée comme structure volumineuse (28) par des surfaces en forme de barre (29) le long des bords des flancs (6, 30).

10. Structure superficielle de joint, selon une des revendications précédentes,
caractérisée du fait qu'à l'intérieur ou à l'extérieur de la structure, des bords de référence indépendants (20, 23) sont disposés, lesquels montrent une coordination incontestable des positions de crantage (9) et/ou du fait quelles sont découpées par des ouvertures (21), qui montrent une référence symétrique définie, vis à vis des positions de crantage voisins.

11. Structure superficielle de joint, selon une des revendications précédentes,
caractérisée du fait qu'entre elle et une contre-surface, des dispositifs complémentaires ont été disposés, lesquels mettent cette contre-surface en mouvement commandé par la force de gravité ou de la forme (22, 23), la maintiennent dans les positions d'appui ou de crantage (9, 11) ou bien la détache de celui-ci ou bien la crante solidement là-bas (31).

**Fig. 2**

**Fig. 1**

Fig. 3

Fig. 4

EP 0 304 498 B1

**2**

5

8

11

5

9

8

1

**Fig. 5**

13

12

7.2

13

7.1

3

14

3

7

1

4

7

**Fig. 6**

12

**Fig.9**

$F = 0$     $F$

**Fig.7**

**Fig. 8**

Fig. 10

Fig. 11